## Europäisches Patentamt
## European Patent Office
## Office européen des brevets

(19)

(11) Numéro de publication: **0 123 288 B1**

(12) **FASCICULE DE BREVET EUROPEEN**

(45) Date de publication du fascicule du brevet:
**19.11.87**

(51) Int. Cl.⁴: **G 02 B 6/44**

(21) Numéro de dépôt: **84104442.3**

(22) Date de dépôt: **19.04.84**

(54) **Procédé de fabrication d'un câble à fibres optiques.**

(30) Priorité: **22.04.83 FR 8306617**

(43) Date de publication de la demande:
**31.10.84 Bulletin 84/44**

(45) Mention de la délivrance du brevet:
**19.11.87 Bulletin 87/47**

(84) Etats contractants désignés:
**DE FR GB IT**

(56) Documents cités:
**EP - A - 0 076 637
EP - A - 0 078 213
AU - A - 514 051
DE - A - 2 519 050
FR - A - 1 002 545
US - A - 4 154 049**

(73) Titulaire: **LES CABLES DE LYON Société anonyme dite:,
170 quai de Clichy, F-92111 Clichy Cedex (FR)**

(72) Inventeur: **Degoix, Bernard, 17, rue Lalande,
F-62100 Calais (FR)**
Inventeur: **Boussemaer, Daniel, 90 bis, des Quatre
Coins, F-62100 Calais (FR)**

(74) Mandataire: **Weinmiller, Jürgen et al,
Lennéstrasse 9 Postfach 24, D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de fabrication d'un câble à fibres optiques, comprenant un élément axial résistant à la traction, entouré par un jonc de matière thermoplastique muni sur son pourtour de rainures ou cavités longitudinales, dans lesquelles sont disposées des fibres optiques en surlongueur, le jonc étant entouré d'une gaine de protection, procédé dans lequel on applique le jonc sur l'élément axial, on soumet le jonc et l'élément axial à une contrainte initiale de traction les allongeant au-dessous de leurs limites élastiques, on dépose les fibres optiques dans les rainures ou cavités du jonc ainsi allongé élastiquement, puis on supprime la contrainte de traction de façon que les fibres optiques se retrouvent placées en surlongueur dans les rainures.

On a déjà proposé dans la demande DE-A-25 19 050 de soumettre un jonc en matière plastique, de section droite en étoile ménageant des cavités longitudinales, et muni d'un fil axial métallique, à une traction dans le domaine élastique, de déposer les fibres optiques dans les cavités longitudinales du jonc en état d'allongement, puis de supprimer la contrainte de traction pour donner aux fibres optiques un certain mou dans les cavités longitudinales. Toutefois le jonc et l'élément central métallique ont des coefficients d'allongement à la traction très différents, et la limite d'allongement élastique des métaux usuels est insuffisante pour que les fibres optiques ne soient pas soumises elles-mêmes ultérieurement à des contraintes de traction excessives lorsque de tettes contraintes s'exercent sur le câble au cours de ses manipulations et de sa pose. Par ailleurs, les matières plastiques tendent à s'allonger de façon partiellement irréversible. Ce procédé ne permet donc pas d'éviter des contraintes de traction excessives sur les fibres optiques susceptibles d'entraîner leur casse.

La présente invention a pour but de procurer un câble à fibres optiques dans lequel celles-ci présentent dans leurs rainures ou cavités longitudinales un mou suffisant pour n'être pas soumises à des contraintes de traction dangereuses au cours des manipulations ou de la pose du câble dans les conditions les plus dures, de sorte que le risque de leur casse est exclu.

Le procédé selon l'invention est caractérisé en ce que l'on utilise comme élément axial un fil ou une corde en un acier martensitique durci par précipitation, capable d'être allongé d'au moins 1,1 à 1,4% dans le domaine élastique, et en ce que l'on soumet ledit élément axial et ledit jonc à une contrainte initiale de traction les allongeant élastiquement de ladite valeur de 1,1 à 1,4% lors de la pose des fibres optiques dans les rainures, de sorte que ces fibres se retrouvent placées dans les rainures selon une surlongueur d'une valeur correspondante après suppression de la contrainte de traction.

Il répond en outre de préférence à au moins l'une des caractéristiques suivantes:

– L'élément axial se compose d'un fil central et de six fils toronnés autour du fil central.

– L'acier de l'élément axial comprend en poids 17 à 19% de nickel, 8,5 à 9,5% de cobalt, 4,5 à 5,5% de molybdène, 0,4 à 0,8% de titane, au plus environ 0,03% de carbone, et a été soumis à un traitement thermique à 480 °C pendant au moins 4 heures sous atmosphère d'azote, ou de gaz inerte, ou sous vide.

– Pour la fabrication d'un câble avec jonc à rainures hélicoïdales, le jonc est appliqué sur l'élément axial en extrudant de la matière thermoplastique autour de l'élément axial, puis en faisant passer l'ensemble ainsi formé dans une filière tournante montée au voisinage immédiat de la zone d'extrusion, sans réchauffage de la filière tournante, cette dernière étant intérieurement conformée de façon à produire les rainures.

Il est décrit ci-après, à titre d'exemple et en référence aux figures du dessin annexé, un dispositif à filière tournante de préparation d'un jonc à rainures hélicoïdales en chlorure de polyvinyle muni d'un élément axial en acier martensitique durci par précipitation, dans les rainures duquel on pourra ensuite déposer les fibres optiques, avant de supprimer la contrainte de traction, de façon à donner aux fibres optiques un mou suffisant dans les rainures.

La figure 1 représente en coupe diamétrale la boudineuse d'alimentation en matière plastique et la filière tournante de fabrication du jonc.

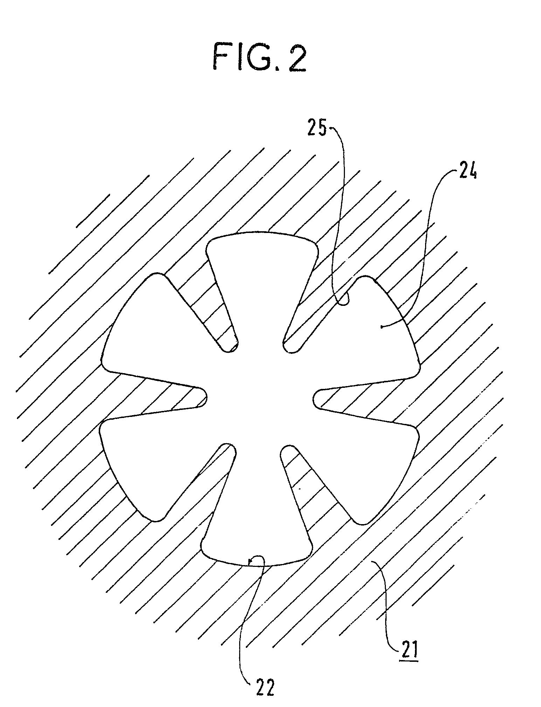

La figure 2 représente en élévation le profil interne de la filière tournante imprimant sa forme au jonc.

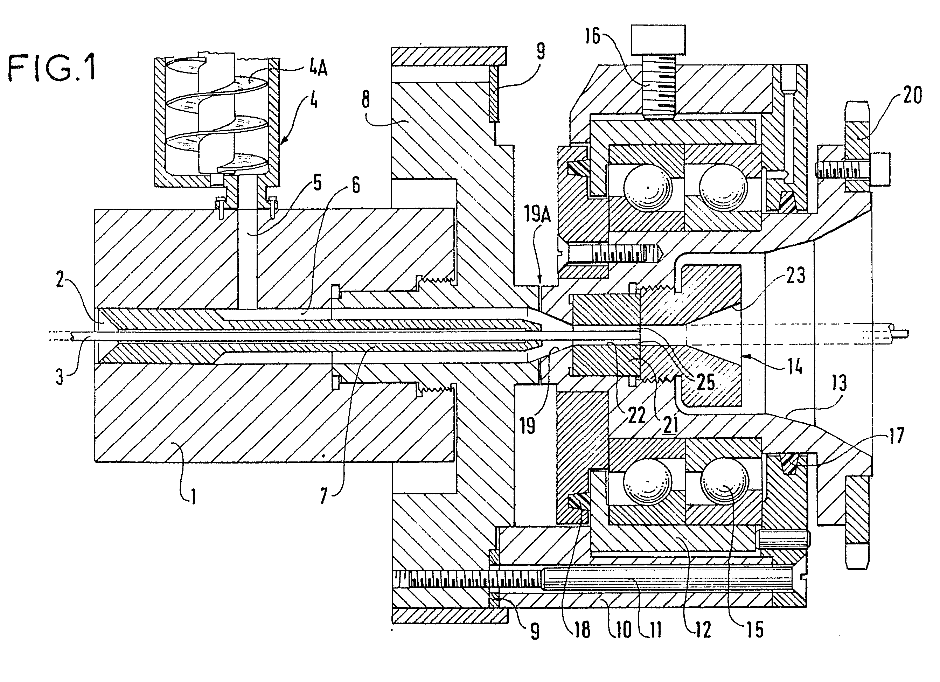

Dans la figure 1, le corps 1 de la boudineuse comporte à son arrière un alésage 2 par lequel pénètre la corde 3 formée d'un fil central et de six fils périphériques, en acier martensitique durci par précipitation. Cette corde est en acier à 17–19% de nickel, 8,5–9,5% de cobalt, 4,5–5,5% de molybdène, 0,4–0,8% de titane, et 0,03% de carbone. Elle a été soumise à un traitement thermique à 480 °C pendant 4 heures sous atmosphère d'azote. Un tel acier possède une limite élastique de 1,3 à 1,4% et une résistance à la rupture de 240 Kg/mm$^2$.

Cette corde est introduite sous tension, obtenue par un cabestan, à gauche de la figure (non représenté), et un dispositif imprimant une vitesse d'avance plus élevée au jonc, et par suite exerçant une traction sur celui-ci, à droite de la figure (également non représenté). La tension est telle par exemple que le jonc s'allonge de 1,1%.

Le pot latéral 4, muni d'une vis sans fin 4A, refoule une matière plastique à l'état fondu, par exemple du polychlorure de vinyle ou du polypropylène sous une pression de 150 à 300 bars, dans une cavité annulaire 6 autour du poinçon 7. Un plateau chauffant 8 à résistances de chauffage non représentées entoure l'agrégat à l'avant du poinçon. Sa face avant est séparée d'un bâti fixe 10 entourant la filière tournante 13 par des cales d'épaisseur 9.

Le bâti fixe 10 est assujetti sur le plateau chauffant 8 par des vis 11 s'engageant dans des trous taraudés de ce plateau de façon à appliquer la face du bâti tournée vers le plateau contre les cales d'épaisseur.

La pièce interne 12 du bâti fixe est séparée de la pièce mobile 13 entourant la filière tournante 14 par le roulement à billes 15. La pièce 12 ne comportant pas d'élément chauffant, le roulement travaille dans de bonnes conditions. Des joints 17, 18 assurent l'étanchéité à l'huile de lubrification des roulements. Le centrage de la pièce interne 12, et par suite celui de la pièce mobile 13 et de la filière tournante 14, est réglable avec une grande précision à l'aide de vis telles que 16.

La pièce mobile 13 possède une ouverture axiale d'admission conique convergente 19, en face de la cavité 6 de la boudineuse, dont elle est séparée par un léger jeu 19A, permettant une faible fuite contrôlée de la matière plastique. Elle est entraînée en rotation par une couronne dentée 20, en prise avec un pignon d'entraînement non représenté.

La filière disposée à l'intérieur de la pièce tournante 13, comporte un corps cylindrique 21 à alésage axial 22 d'introduction de la matière plastique, comportant des lobes radiaux répartis circonférentiellement en forme d'étoile 24 séparés par des cloisons 25. Cette filière est usinée dans le même acier martensitique à durcissement par précipitation que la corde du jonc. En aval de la filière un écrou de profil interne conique divergent 23 maintient celle-ci dans son logement.

La pose des fibres optiques dans les rainures s'effectue dans un dispositif non représenté, par exemple celui ayant fait l'objet de la demande de brevet FR-A-24 97 965 du 12 janvier 1981 de la demanderesse, suivi d'un dispositif de tirage exerçant une traction sur la corde et le jonc. On obtient en aval de celui-ci un jonc dans lequel les fibres optiques sont disposées dans les rainures avec un mou permettant de les soustraire à la plus grande partie des contraintes de traction qui s'exerceront ultérieurement sur le câble lors des ses manipulations et de sa pose. En admettant par exemple que ces contraintes soient susceptibles de produire un allongement du câble de 1,5%, la mise en tension élastique initiale permet de faire absorber 1,1% de cet allongement par la remise en place sans mou des fibres optiques dans leurs rainures, le reste de l'allongement 0,4% restant notablement au-dessous de la limite élastique des fibres optiques.

## Revendications

1. Procédé de fabrication d'un câble à fibres optiques, comprenant un élément axial (3) résistant à la traction, entouré par un jonc de matière thermoplastique muni sur son pourtour de rainures ou cavités longitudinales, dans lesquelles sont disposées des fibres optiques en surlongueur, le jonc étant entouré d'une gaine de protection, procédé dans lequel on applique le jonc sur l'élément axial, on soumet le jonc et l'élément axial à une contrainte initiale de traction les allongeant au-dessous de leurs limites élastiques, on dépose les fibres optiques dans les rainures ou cavités du jonc ainsi allongé élastiquement, puis on supprime la contrainte de traction de façon que les fibres optiques se retrouvent placées en surlongueur dans les rainures, procédé caractérisé en ce que l'on utilise comme élément axial un fil ou une corde en un acier martensitique durci par précipitation, capable d'être allongé d'au moins 1,1 à 1,4% dans le domaine élastique, et en ce que l'on soumet ledit élément axial et ledit jonc à une contrainte initiale de traction les allongeant élastiquement de ladite valeur de 1,1 à 1,4% lors de la pose des fibres optiques dans les rainures, de sorte que ces fibres se retrouvent placées dans les rainures selon une surlongueur d'une valeur correspondante après suppression de la contrainte de traction.

2. Procédé selon la revendication 1, caractérisé en ce que l'élément axial se compose d'un fil central et de six fils toronnés autour du fil central.

3. Procédé selon les revendications 1 ou 2, caractérisé en ce que l'acier de l'élément axial comprend en poids 17 à 19% de nickel, 8,5 à 9,5% de cobalt, 4,5 à 5,5% de molybdène, 0,4 à 0,8% de titane, au plus environ 0,03% de carbone, et a été soumis à un traitement thermique à 480 °C pendant au moins 4 heures sous atmosphère d'azote, ou de gaz inerte, ou sous vide.

4. Procédé selon l'une des revendications 1 à 3, pour la fabrication d'un câble avec jonc à rainures hélicoïdales, caractérisé en ce que le jonc est appliqué sur l'élément axial en extrudant de la matière thermoplastique autour de l'élément axial, puis en faisant passer l'ensemble ainsi formé dans une filière tournante (21, 23) montée au voisinage immédiat de la zone d'extrusion, sans réchauffage de la filière tournante, ladite filière tournante étant intérieurement conformée de façon à produire lesdites rainures.

## Patentansprüche

1. Verfahren zur Herstellung eines Lichtleitfaserkabels, mit einem zugfesten axialen Element (3), umgeben von einem Stab aus thermoplastischem Material, der auf seinem Umfang längliche Nuten oder Hohlräume aufweist, in denen Lichtleitfasern in Überlänge angeordnet sind, wobei der Stab von einer Schutzhülle umgeben ist, wobei man den Stab auf das axiale Element aufbringt, den Stab und das axiale Element einer Anfangs-Zugbelastung unterwirft, die sie unterhalb ihrer elastischen Grenzen dehnt, worauf man die Lichtleitfasern in die Nuten oder Hohlräumen des so elastisch verlängerten Stabs einlegt und dann die Zugbelastung absetzt, so dass die Lichtleitfasern sich in Überlänge in den Nuten befinden, dadurch gekennzeichnet, dass man als axiales Element einen Draht oder ein Seil aus einem durch Fällung gehärteten martensitischen Stahl verwendet, der um mindestens 1,1 bis 1,4% im elastischen Bereich gelängt werden kann, und dass man das axiale Element und das Rohr einer Anfangs-Zugbelastung aussetzt, die sie elastisch um den genannten Wert von 1,1 bis 1,4% während des Einbringens der Lichtleitfasern in die Nuten längt, so dass diese Fasern sich nach dem Absetzen der Zugbelastung in den Nuten in einer Überlänge eines entsprechenden Werts befinden.

2. Verfahren nach Ansprüchen 1, dadurch gekennzeichnet, dass das axiale Element aus einem zentralen Draht und sechs um den zentralen Draht verseilten Drähten besteht.

3. Verfahren nach Ansprüchen 1 oder 2, dadurch gekennzeichnet, dass der Stahl des axialen Elements in Gewichtsprozent 17 bis 19% Nikkel, 8,5 bis 9,5% Kobalt, 4,5 bis 5,5% Molybdän, 0,4 bis 0,8% Titan, höchstens etwa 0,03% Kohlenstoff enthält und während mindestens 4 Stunden einer Wärmebehandlung bei 480 °C unter Stickstoffatmosphäre, Inertgas oder unter Vakuum unterzogen wurde.

4. Verfahren nach einem der Ansprüche 1 bis 3, zur Herstellung eines Kabels mit einem Stab mit spiralförmigen Nuten, dadurch gekennzeichnet, dass der Stab auf das axiale Element aufgebracht wird durch Extrudieren von thermoplastischem Material um das axiale Element, dass dann die so gebildete Einheit durch ein drehendes Zieheisen (21, 23) geführt wird, das direkt neben dem Extrudierbereich liegt, ohne dass das drehende Zieheisen wieder erhitzt wird, wobei das drehende Zieheisen innen so geformt ist, dass es die Nuten herstellt.

**Claims**

1. A method of manufacturing an optical fiber cable comprising a traction resisting axial element (3) surrounded by a rod of thermoplastic material provided on its periphery with longitudinal grooves or cavities, in which are disposed optical fibers in excess length, the rod being surrounded by a protective sheath, the method in which the rod is applied on the axial element, the rod and the axial element are submitted to an initial traction stress lengthening them below their elastic limits, the optical fibers are deposited in the grooves or cavities of the elastically stretched rod, then the traction stress is removed, so that the optical fibers have an excess length in the grooves, characterized in that for the axial element a wire or a cord of a precipitation hardened martensitic steel is used, which is able to be lengthened by a rate of about at least 1,1 to 1,4% in the elastic range, and that said axial element and said rod are submitted to an initial traction stress lengthening them elastically by said rate of 1,1 to 1,4% during the deposition of the optical fibers in the grooves, so that these fibers are placed in the grooves with an excess length of a corresponding rate after suppression of the traction stress.

2. A method according to claim 1, characterized in that the axial element is composed of a central wire and of six wires stranded around the central wire.

3. A method according to claims 1 and 2, characterized in that the steel of the axial element comprises in weight 17 to 19% of nickel, 8,5 to 9,5% of cobalt, 4,5 to 5,5% of molybdenum, 0,4 to 0,8% titanium, at most about 0,03% of carbon, and has been submitted to a heat treatment at 480 °C during at least 4 hours under an atmosphere of nitrogen, or of inert gas or under a vacuum.

4. A method according to one of claims 1 to 3, for the manufacture of a cable with a rod having helical grooves, characterized in that the rod is applied on the axial element by extruding thermoplastic material around the axial element, then by making the thus formed unit pass through a rotary die (21, 23) mounted in the immediate neighbourhood of the extrusion zone, without re-heating the rotary die, said rotary die being formed on its inside so as to produce said grooves.

FIG.1

# FIG. 2